# FASCICULE DE BREVET EUROPEEN

(11) **EP 3 238 920 B1**
(45) Date de publication et mention de la délivrance du brevet: **29.06.2022**
(21) Numéro de dépôt: 17167378.3
(22) Date de dépôt: 20.04.2017
(51) Int. Cl.: B29C 65/16, F21S 41/29, F21S 43/27

(54) **DISPOSITIF LUMINEUX COMPRENANT AU MOINS DEUX PARTIES SOUDÉES AU LASER**
LEUCHTVORRICHTUNG, DIE MINDESTENS ZWEI LASERGESCHWEISSTE TEILE UMFASST
LUMINOUS DEVICE COMPRISING AT LEAST TWO LASER-WELDED PORTIONS

(30) Priorité: 27.04.2016 FR 1653729
(43) Date de publication de la demande: 01.11.2017
(73) Titulaire: Valeo Iluminacion, 23600 Martos (ES)
(72) Inventeur: ROMAN, Juan-Andres, 23600 Martos (ES); ALVARO, Francisco, 23600 Martos (ES); LA-ROSA, Roberto, 23600 Martos (FR)
(74) Mandataire: Valeo Visibility

(56) Documents cités:
- EP-A1- 2 725 290
- EP-A1- 2 923 820
- JP-A- 2015 185 375
- US-A1- 2005 266 762
- US-B1- 6 592 239

## Description

L'invention se rapporte à un dispositif lumineux de véhicule automobile comprenant au moins deux parties soudées l'une à l'autre au laser, ainsi qu'à un procédé de fabrication dudit dispositif lumineux.

Un dispositif lumineux de véhicule automobile comprend au moins une source lumineuse ainsi que différents éléments optiques comme par exemple un réflecteur, une optique de projection et/ou une glace permettant de fermer le dispositif lumineux.

Les différents éléments d'un dispositif lumineux sont en général réalisés en un matériau thermoplastique pouvant être transparent ou opaque, coloré ou non. Ces éléments en matériau thermoplastique peuvent être fixés les uns aux autres par différentes méthodes comme le collage ou le soudage. Parmi les méthodes de soudage classiquement utilisées, le soudage laser est une méthode permettant un soudage de qualité sans émission de particules.

Plus particulièrement, le soudage au laser est réalisé classiquement entre une première pièce transparente à la lumière visible et transparente à un faisceau laser, et une deuxième pièce absorbant ledit faisceau laser. Le faisceau laser passe ainsi tout d'abord à travers la première pièce pour atteindre la deuxième pièce. Le soudage est alors effectué à l'interface entre les deux pièces lorsque le faisceau laser atteint la deuxième pièce absorbant ledit faisceau. En effet, au niveau de l'interface, la deuxième pièce chauffe sous l'effet du faisceau laser ce qui permet de réaliser la soudure des deux pièces. Par exemple, le document EP2923820 A1 montre un procédé de soudage au laser d'un boîtier et d'une glace dans un dispositif lumineux de véhicule automobile.

Cependant, un inconvénient du procédé de soudage au laser comme réalisé dans l'art antérieur, est que la zone de soudure n'est pas optimisée, et elle peut être visible à travers la première pièce, ce qui peut nuire à l'aspect esthétique du dispositif lumineux obtenu.

Le but de la présente invention est de pallier les inconvénients de l'art antérieur en proposant un dispositif lumineux comprenant au moins deux parties soudées au laser par la mise en œuvre d'un procédé de fabrication facilité et permettant d'obtenir une soudure de qualité améliorée.

La présente invention a ainsi pour objet un dispositif lumineux de véhicule automobile comprenant :
- au moins une première partie transparente à au moins un faisceau laser, ladite partie comprenant au moins un premier matériau polymère, et
- au moins une deuxième partie absorbant ledit faisceau laser et transparente à au moins une partie de la lumière visible, comprenant au moins un deuxième matériau polymère,
ladite deuxième partie étant soudée au laser à ladite première partie.

Grâce à l'invention, les deux parties du dispositif lumineux sont soudées par un procédé facile à mettre en œuvre et permettant d'obtenir une soudure de qualité améliorée. En outre, la soudure n'est pas visible au travers de la deuxième partie et le dispositif lumineux présente donc un aspect esthétique amélioré. Enfin, le soudage au laser permet de fixer les deux parties l'une à l'autre sans utiliser de composés toxiques et sans émission de particules.

### Premier et deuxième matériaux polymères

Selon un mode de réalisation du dispositif lumineux de l'invention, le premier matériau polymère peut comprendre au moins un polymère organique, notamment amorphe ou semi-cristallin, pouvant être choisi parmi le polyméthacrylate de méthyle (PMMA), le polycarbonate (PC), le polymère acrylonitrile butadiène styrène (ABS), le polytéréphtalate de butylène (PBT), l'acrylonitrile styrène acrylate (ASA), le polytéréphtalate d'éthylène (PET), et un de leurs mélanges.

A titre d'exemple préféré de polymère organique, on peut citer le polyméthacrylate de méthyle de couleur noire et transparent, commercialisé par la société Altuglas International (Arkema group) sous la référence Plexiglas V825T black 58015.

Selon l'invention, le premier matériau polymère peut être transparent à un ou plusieurs faisceau(x) laser, et peut ainsi comprendre au moins un polymère transparent audit faisceau laser.

Dans la présente invention, on entend par « transparent à au moins un faisceau laser », un polymère, un matériau polymère ou une partie qui transmet la totalité dudit faisceau laser dans une gamme de longueurs d'onde donnée. Le faisceau passe ainsi à travers le polymère, le matériau polymère ou la partie avec une faible perte d'énergie, voire sans perte d'énergie. En particulier, l'énergie transmise est d'au moins 80%, de préférence d'au moins 90%, et plus préférentiellement d'au moins 95%, par rapport à l'énergie reçue par le faisceau laser.

Le premier matériau polymère peut en outre absorber au moins une partie de la lumière visible, et peut ainsi comprendre au moins un polymère absorbant au moins une partie de la lumière visible.

Dans la présente invention, la lumière visible est constituée de l'ensemble des onde électromagnétiques perçues par la vision humaine, en particulier des onde électromagnétiques dont les longueurs d'onde, dans le vide, sont comprises entre 380 nm (violet) et 780 nm (rouge).

Dans le cas où le premier matériau polymère comprend plusieurs polymères absorbants au moins une partie de la lumière visible, lesdits polymères peuvent absorber la lumière à des longueurs d'onde identiques ou différentes.

De préférence, le premier matériau polymère peut absorber toute la lumière visible, et peut ainsi comprendre au moins un polymère absorbant toute la lumière visible.

Dans la présente invention, on entend par « absorbant au moins une partie de la lumière visible », un polymère, un matériau polymère ou une partie qui absorbe au moins une longueur d'onde dans le visible, et de préférence toutes les longueurs d'onde dans le visible.

Le deuxième matériau polymère peut comprendre au moins un polymère organique, notamment amorphe ou semi-cristallin, pouvant être choisi parmi le polyméthacrylate de méthyle (PMMA), le polycarbonate (PC), le polymère acrylonitrile butadiène styrène (ABS), le polytéréphtalate de butylène (PBT), l'acrylonitrile styrène acrylate (ASA), le polytéréphtalate d'éthylène (PET), et un de leurs mélanges.

A titre d'exemple préféré de polymère organique, on peut citer le polyméthacrylate de méthyle, commercialisé par la société Evonik Röhm GmbH sous la référence Plexiglas Heatresist hw55.

Selon l'invention, le deuxième matériau polymère peut absorber un ou plusieurs faisceau(x) laser, et peut ainsi comprendre au moins un polymère absorbant ledit faisceau laser.

Dans le cas où le deuxième matériau polymère comprend plusieurs polymères absorbants au moins un faisceau laser, lesdits polymères peuvent absorber ledit faisceau laser à des longueurs d'onde identiques ou différentes.

Dans la présente invention, on entend par « absorbant un faisceau laser », un polymère, un matériau polymère ou une partie qui absorbe un faisceau laser à une gamme de longueur d'onde donnée. Un tel polymère, matériau polymère ou une telle partie absorbe l'énergie du faisceau laser dans cette gamme de longueurs d'onde.

Le deuxième matériau polymère peut en outre être transparent à au moins une partie de la lumière visible, et peut ainsi comprendre au moins un polymère transparent à au moins une partie de la lumière visible.

Dans la présente invention, on entend par « transparent à au moins une partie de la lumière visible », un polymère, un matériau polymère ou une partie qui transmet la lumière visible par réfraction et au travers duquel ou de laquelle les objets sont visibles avec plus ou moins de netteté. Plus particulièrement, ce polymère, ce matériau polymère ou cette partie à travers duquel ou de laquelle une image est observée sans perte significative de contraste signifie que l'interposition dudit polymère, dudit matériau polymère ou de ladite partie transparent(e) entre une image et un observateur de celle-ci ne réduit pas significativement la qualité de l'image. En effet, au sens de l'invention, un polymère, un matériau polymère ou une partie transparent(e) peut transmettre au moins une partie de la lumière visible incidente (ou rayon lumineux incident) avec très peu, voire sans dispersion. De préférence, la transmission lumineuse, notamment la transmission de la lumière visible, à travers le polymère, le matériau polymère ou la partie transparent(e) est d'au moins 87%. La transmission lumineuse est la quantité de lumière visible que laisse passer le polymère, le matériau polymère ou la partie transparente à partir d'un rayon lumineux incident.

### Première et deuxième parties

Dans la présente invention, l'élément optique comprend au moins une première partie et au moins une deuxième partie, la première partie comprenant au moins le premier matériau polymère et la deuxième partie comprenant au moins le deuxième matériau polymère.

La première partie est transparente à un ou plusieurs faisceau(x) laser. Ainsi, la première partie peut comprendre au moins un premier matériau polymère transparent audit faisceau laser. De préférence, la première partie ne comprend pas de charge absorbant ledit faisceau laser.

En particulier, la première partie peut être transparente à un ou plusieurs faisceau(x) laser à des longueurs d'onde allant de 800 nm à 1050 nm, de préférence de 900 nm à 1000 nm, et plus préférentiellement égale à 980 nm.

La première partie peut en outre absorber au moins une partie de la lumière visible.

En particulier, la première partie peut absorber la lumière visible à des longueurs d'onde allant de 380 nm à 780 nm.

Dans la présente invention, l'absorbance de la première partie à au moins une partie de la lumière visible peut être déterminée en utilisant par exemple un spectrophotomètre fonctionnant en transmission ou en réflexion.

Selon une première variante, la première partie peut comprendre au moins un premier matériau polymère absorbant au moins une partie de la lumière visible, tel que décrit précédemment.

Selon une deuxième variante, la première partie peut comprendre au moins une première charge absorbant au moins une partie de la lumière visible.

En particulier, la première charge peut absorber au moins une partie de la lumière visible à des longueurs d'onde allant de 380 nm à 780 nm.

Dans le cas où la première partie comprend plusieurs charges absorbant au moins une partie de la lumière visible, lesdites charges peuvent absorber la lumière visible à des longueurs d'onde identiques ou différentes.

Selon une troisième variante, la première partie peut comprendre ledit premier matériau polymère tel que décrit dans la première variante et ladite première charge telle que décrite dans la deuxième variante.

Selon cette troisième variante, le premier matériau polymère ainsi que la première charge peuvent absorber la lumière visible à des longueurs d'onde identiques ou différentes.

Selon l'invention, la première partie peut en outre comprendre au moins un additif, notamment bien connu de l'homme du métier et pouvant être choisis parmi :
- des agents colorants tels que des pigments ;
- des agents anti-UV ;
- des agents de protection tels que des antioxydants ;
- des agents de mise en œuvre, tels que des plastifiants, des lubrifiants, des huiles ;
- des agents de réticulation, tels que par exemple des peroxydes organiques ; et
- un de leurs mélanges.

La deuxième partie absorbe un ou plusieurs faisceau(x) laser.

En particulier, la deuxième partie peut absorber au moins un faisceau laser à des longueurs d'onde allant de 800 nm à 1050 nm, de préférence de 900 nm à 1000 nm, et plus préférentiellement égale à 980 nm.

Dans la présente invention, l'absorbance de la deuxième partie à un faisceau laser peut être aussi déterminée par un spectrophotomètre.

Selon un mode de réalisation préféré, la deuxième partie absorbe au moins un faisceau laser dans une gamme de longueurs d'onde à laquelle la première partie est transparente.

Selon une première variante, la deuxième partie peut comprendre au moins un deuxième matériau polymère absorbant au moins un faisceau laser, tel que décrit précédemment.

Selon une deuxième variante, la deuxième partie peut comprendre au moins une deuxième charge absorbant au moins un faisceau laser.

En particulier, la deuxième charge absorbant au moins un faisceau laser peut absorber à des longueurs allant de 800 nm à 1050 nm, de préférence de 900 nm à 1000 nm, et plus préférentiellement égale à 980 nm.

Dans le cas où la deuxième partie comprend plusieurs charges absorbant au moins un faisceau laser, lesdites charges peuvent absorber le faisceau laser à des longueurs d'onde identiques ou différentes.

Selon une troisième variante, la deuxième partie peut comprendre ledit deuxième matériau polymère tel que décrit dans la première variante et ladite deuxième charge telle que décrite dans la deuxième variante.

Selon cette troisième variante, le deuxième matériau polymère ainsi que la deuxième charge peuvent absorber au moins un faisceau laser à des longueurs d'onde identiques ou différentes.

Selon l'invention, la deuxième partie est transparente à au moins une partie de la lumière visible. En particulier, la deuxième partie peut être transparente à des longueurs d'onde allant de 380 nm à 780 nm.

Ainsi, la deuxième partie peut comprendre au moins un matériau polymère transparent à au moins une partie de la lumière visible, et optionnellement au moins une charge transparente à la lumière visible.

Selon l'invention, la deuxième partie peut en outre comprendre au moins un additif, notamment bien connu de l'homme du métier et pouvant être choisis parmi :
- des agents colorants tels que des pigments (e.g. noir de carbone) ;
- des agents anti-UV ;
- des agents de protection tels que des antioxydants ;
- des agents de mise en œuvre, tels que des plastifiants, des lubrifiants, des huiles ;
- des agents de réticulation, tels que par exemple des peroxydes organiques ; et
- un de leurs mélanges.

Selon un mode de réalisation particulier, la deuxième partie peut être une couche, telle que par exemple un verni ou un encre, appliquée sur une troisième partie.

Selon l'invention, la première et/ou la deuxième partie peu(ven)t être résistante(s) aux rayons UV. Ces derniers n'endommagent donc pas la ou les partie(s). La première et/ou la deuxième partie peuvent ainsi comprendre au moins un matériau polymère résistant aux rayons UV et/ou au moins une charge résistante aux rayons UV.

Selon l'invention, la première et la deuxième parties peuvent présenter respectivement des propriétés optiques différentes vis-à-vis de la lumière visible et/ou du faisceau laser. Plus particulièrement, la première et la deuxième parties peuvent comprendre respectivement le ou les même matériau(x) polymère(s), mais comprendre des charges de nature différente.

Selon l'invention, la première partie peut avoir une épaisseur inférieure à 10 mm, et de préférence allant de 2 mm à 6 mm. La deuxième partie peut avoir une épaisseur inférieure à 10 mm, et de préférence allant de 2 mm à 6 mm.

### Procédé de soudage

Un autre objet de l'invention est un procédé de fabrication du dispositif lumineux de l'invention comprenant les étapes suivantes :
i. mettre en contact la première partie et la deuxième partie, puis
ii. irradier ladite deuxième partie à travers ladite première partie par au moins ledit faisceau laser, pour souder ladite deuxième partie à ladite première partie.

En particulier, la première partie peut comprendre au moins une première surface de contact, et la deuxième partie peut comprendre au moins une deuxième surface de contact, la première et la deuxième parties étant destinées à être soudées par la soudure de la première surface de contact avec la deuxième surface de contact.

Selon l'invention, la première et la deuxième surfaces de contact ne sont de préférence pas modifiées mécaniquement, notamment leur rugosité de surface n'est pas modifiée

### Etape i

L'étape i du procédé de l'invention comprend la mise en contact physique de la première et la deuxième parties, et notamment la mise en contact physique de la première et de la deuxième surfaces de contact. Cette étape de mise en contact peut être plus particulièrement une étape de compression permettant de compresser la première et la deuxième parties l'une contre l'autre, en particulier au niveau de la première et de la deuxième surfaces de contact.

### Etape ii

L'étape ii, postérieure à l'étape i, comprend l'irradiation par au moins un faisceau laser de la deuxième partie, en particulier au niveau de la deuxième surface de contact, et ce, à travers la première partie.

La première partie étant transparente au faisceau laser, ce dernier atteint la deuxième partie, et en particulier la deuxième surface de contact, avec une faible perte d'énergie, voire sans perte d'énergie. La deuxième partie ayant la propriété d'absorber ledit faisceau laser, elle absorbe au moins une partie du faisceau laser, en particulier au niveau de la deuxième surface de contact, et fond par échauffement sur une épaisseur allant de 2 mm à 3 mm. La première surface de contact de la première partie fond également par conduction thermique sur une épaisseur allant de 2 mm à 3 mm. Le premier et le deuxième matériau polymères se mélangent au niveau de la jonction entre la première et la deuxième parties, en particulier au niveau de la jonction entre la première et la deuxième surfaces de contact.

Selon l'étape ii du procédé de l'invention, le faisceau laser peut irradier la deuxième partie, à travers la première partie, à une longueur d'onde allant de 800 nm à 1050 nm, de préférence de 900 nm à 1000 nm, et plus préférentiellement égale à 980 nm.

Selon l'étape ii du procédé de l'invention, le faisceau laser peut irradier la deuxième partie, à travers la première partie, à une puissance allant de 50 W à 200 W, de préférence de 80 W à 150 W, et plus préférentiellement de 100 W.

Selon l'étape ii, le faisceau laser irradie la deuxième partie à une température supérieure à la température de fusion du deuxième matériau polymère.

Selon une variante possible, l'étape ii d'irradiation peut être réalisée par un seul faisceau laser, comme par exemple selon la méthode de « Robot Laser Welding » (RLW).

Selon une autre variante possible, l'étape ii d'irradiation peut être réalisée par plusieurs faisceaux laser simultanément pouvant irradier à des longueurs d'onde et à des puissances identiques ou différentes, comme par exemple selon la méthode de « Quasi-simultaneous Laser Welding ».

L'étape ii d'irradiation peut durer un temps suffisant pour assurer une solidarisation des deux pièces.

A titre d'exemple, la vitesse de soudage peut être d'au moins 50 mm/s, de préférence d'au moins 60 mm/s, et de façon particulièrement préférée d'au moins 80 mm/s.

### Etape iii

Le procédé de soudage de l'invention peut comprendre en outre l'étape suivante, postérieure à l'étape i :
iii. irradier la deuxième partie, et notamment la deuxième surface de contact, à travers la première partie par au moins un faisceau lumineux différent du faisceau laser.

L'étape iii peut être préalable à l'étape ii ou concomittante à l'étape ii.

La première partie est transparente à la longueur d'onde de ce faisceau lumineux et la deuxième partie est absorbante à cette même longueur d'onde.

Le faisceau lumineux peut être issu d'une lampe halogène émettant dans l'infra-rouge, et pouvant également émettre dans le visible.

Selon l'étape iii du procédé de l'invention, le faisceau lumineux peut irradier la deuxième partie, à travers la première partie, à une longueur d'onde allant de 350 nm à 1000 nm, et de préférence de 780 nm à 1000 nm.

Selon cette étape, le faisceau lumineux peut irradier la deuxième partie à une puissance allant de 800 W à 2000 W, de préférence de 900 W à 1500 W, et plus préférentiellement égale à 1200 W.

Le faisceau lumineux émis lors de l'étape iii permet de chauffer et donc de ramollir la deuxième surface de contact sur une épaisseur allant de 1 mm à 4 mm. Cette étape permet de mieux conformer la deuxième partie par rapport à la première partie, et en particulier la deuxième surface de contact par rapport à la première surface de contact, de façon à réaliser une soudure de meilleure qualité.

Selon une variante possible, l'étape iii peut être réalisée par plusieurs faisceaux lumineux simultanément, lesdits faisceaux lumineux pouvant irradier à des longueurs d'onde et des puissances identiques ou différentes.

La durée d'irradiation par le faisceau lumineux, peut être inférieure ou égale à la durée l'irradiation par le faisceau laser.

Dans un mode de réalisation particulièrement préféré, Le rayon du faisceau lumineux peut être plus grand que celui du faisceau laser, de sorte que la surface émise par le rayon du faisceau laser est comprise dans la surface émise par le faisceau lumineux.

### Etape iv

Selon le procédé de l'invention, une fois l'étape ii, et optionnellement l'étape iii, terminée(s), une étape iv de refroidissement peut être réalisée. Cette étape peut être réalisée à température ambiante, en particulier à une température de 25 °C, pour une durée allant de 5 min à 1 h.

Dans le procédé de l'invention, l'étape i de mise en contact peut être appliquée de préférence :
- lors de l'étape ii, ou
- lors des étapes ii et iii, ou
- lors des étapes ii, iii et iv.

### Dispositif lumineux

La présente invention s'applique de préférence aux domaines des dispositifs lumineux de véhicule automobile.

Plus particulièrement, le dispositif lumineux de véhicule automobile peut être un dispositif d'éclairage et/ou de signalisation lumineuse.

A titre d'exemple, le dispositif lumineux peut être un feu avant (projecteur) ou un feu arrière de véhicule automobile, ou un dispositif d'éclairage intérieur de véhicule automobile, et de préférence un feu arrière de véhicule automobile.

Un dispositif lumineux de véhicule automobile comprend en général un boîtier fermé par une glace dans lequel est placé un module lumineux.

Dans le dispositif lumineux de l'invention, la première partie est un boîtier formant une enceinte pouvant accueillir au moins une source lumineuse et/ou au moins un module lumineux.

Dans le dispositif lumineux de l'invention, la deuxième partie peut être une glace de fermeture.

En particulier, la deuxième partie peut être une glace de fermeture permettant de fermer le boîtier formé par la première partie.

D'autres caractéristiques et avantages de la présente invention apparaîtront à la lumière de la description d'exemples non limitatifs de modules lumineux selon l'invention, faits en référence aux figures.
- La figure 1 représente une vue schématique et simplifiée d'un procédé de fabrication d'un module lumineux selon l'invention.
- La figure 2 représente une vue schématique et simplifiée d'un dispositif lumineux selon l'invention.

Pour des raisons de clarté, seuls les éléments essentiels pour la compréhension de l'invention ont été représentés de manière schématique et ceci sans respect de l'échelle.

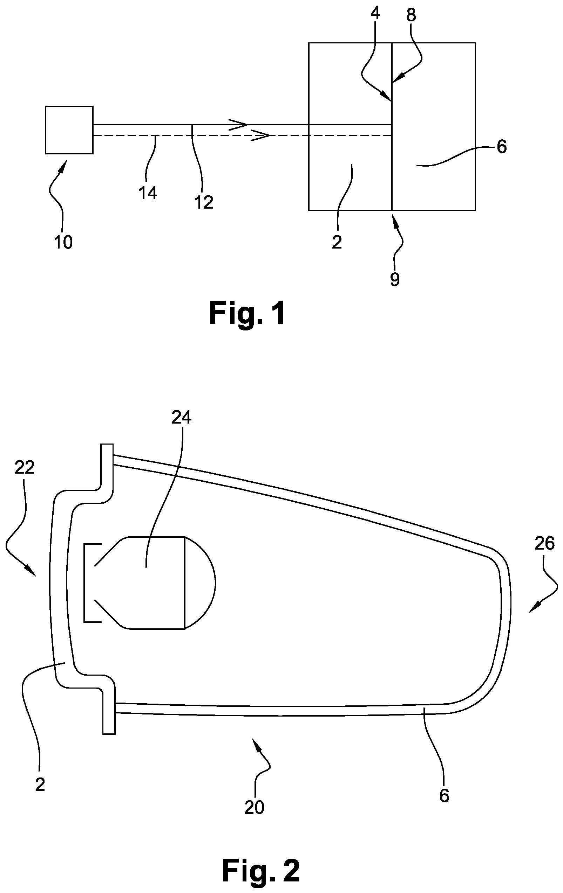

La figure 1 représente une vue schématique et simplifiée d'un procédé de fabrication d'un module lumineux selon l'invention. Une première partie 2 comprend une première surface 4 de contact et une deuxième partie 6 comprend une deuxième surface 8 de contact. Selon le procédé de l'invention, la première partie 2 est mise directement en contact physique avec la deuxième partie 6, et en particulier, la première surface 4 de contact est mise directement en contact physique avec la deuxième surface 8 de contact, formant la zone de contact 9. Un dispositif 10 de soudage émet au moins un faisceau laser 12 et au moins un faisceau lumineux 14. La première partie 2 est transparente au faisceau laser 12 et au faisceau lumineux 14, et la deuxième partie 6 absorbe le faisceau laser 12 et le faisceau lumineux 14. Ainsi, le faisceau laser 12 irradie la deuxième partie 6 au niveau de la deuxième surface 8 de contact au travers de la première partie 2, permettant de faire fondre le deuxième matériau polymère de la deuxième partie 6, en particulier au niveau de la deuxième surface 8 de contact. Le premier matériau polymère et le deuxième matériau polymère se mélangent au niveau de la zone de contact 9 ce qui permet la soudure des deux parties 2 et 6 l'une avec l'autre. De façon concomitante, le faisceau lumineux 14 irradie la deuxième partie 6 au niveau de la deuxième surface 8 de contact au travers de la première partie 2. Ceci permet de ramollir le deuxième matériau polymère de la deuxième partie 6 et de mieux conformer la deuxième surface 8 de contact avec la première surface 4 de contact permettant une soudure de qualité. L'irradiation par le faisceau lumineux 14 permet en outre aux premier et deuxième matériaux polymères d'atteindre leur température de fusion plus rapidement.

La figure 2 représente une vue schématique et simplifiée d'un dispositif lumineux selon l'invention. Le dispositif lumineux 20 comprend un boîtier 22 accueillant un module lumineux 24 ainsi qu'une glace de fermeture 26 permettant de fermer le boîtier 22. Le boîtier 22 et la glace de fermeture 26 ont été soudés l'un à l'autre par le procédé de l'invention tel que décrit dans la figure 1, le boîtier 22 étant formé par la première partie 2 et la glace de fermeture 26 étant formée par la deuxième partie 6. Dans ce dispositif lumineux, le boîtier 22 est noir, et absorbe donc la lumière visible, et transparent au faisceau laser 12 ainsi qu'au faisceau lumineux 14. La glace de fermeture 26 absorbe le faisceau laser 12 et le faisceau lumineux 14.

### Exemple

### Etape i

Selon cet exemple de réalisation, le matériau polymère utilisé pour la première partie du dispositif lumineux est du polyméthacrylate de méthyle de couleur noire et transparent commercialisé par la société Altuglas International (Arkema group) sous la référence Plexiglas V825T black 58015. Ce premier matériau polymère :
- est transparent au laser à une longueur d'onde de 980 nm,
- possède une température de fusion de 230 °C, et
- est de couleur noire.

Le matériau polymère utilisé pour la deuxième partie du dispositif lumineux est du polyméthacrylate de méthyle commercialisé par Evonik Röhm GmbH sous la référence Plexiglas Heatresist hw55. Ce deuxième matériau polymère :
- absorbe le laser à une longueur d'onde de 980 nm,
- est transparent à la lumière visible, et
- possède une température de fusion de 230 °C.

Selon l'étape i du procédé, la première partie est mise au contact de la deuxième partie, en particulier, la première surface de contact de la première partie est directement en contact physique avec la deuxième surface de contact de la deuxième partie et la soudure va être réalisée au niveau de ces deux surfaces de contact. Une étape de compression est réalisée afin de garantir le contact entre les deux surfaces de contact au niveau de la zone à souder.

### Etapes ii et iii

Après l'étape i, l'étape ii et l'étape iii sont réalisées de façon concomitante et comprennent l'irradiation de la deuxième partie au travers de la première partie par un faisceau laser et un faisceau lumineux.

Le faisceau laser irradie la deuxième partie au travers de la première partie à une longueur d'onde de 980 nm et à une puissance de 120 W, et permet ainsi de faire fondre le deuxième matériau polymère, la température au niveau de la deuxième surface de contact étant comprise entre 200 °C et 280 °C. Le rayon du faisceau laser est de 4 mm, et la vitesse de soudage est d'environ 80 mm/s. Le deuxième matériau polymère fond et se mélange au premier matériau polymère au niveau de la zone de contact.

De façon concomitante, le faisceau lumineux est issu d'une lampe halogène émettant dans l'infra-rouge, et pouvant également émettre dans le visible. La puissance de cette lampe halogène est de 1200 W et permet de ramollir la deuxième partie au niveau de la deuxième surface de contact à une température comprise entre 80°C et 90°C afin de bien conformer la zone de contact. Le rayon du faisceau lumineux est plus grand que celui du faisceau laser, de sorte que la surface émise par le rayon du faisceau laser est comprise dans la surface émise par le faisceau lumineux.

### Etape iv

Après la réalisation des étapes ii et iii, une étape de refroidissement iv est réalisée à une température de 25 °C.

La compression réalisée à l'étape i est maintenue pendant les étapes ii, iii et iv.

On obtient le dispositif lumineux 20 tel que représenté sur la figure 2 comprenant un boîtier 22 en tant que première partie et une glace de fermeture 26 en tant que deuxième partie.

## Revendications

1. Dispositif lumineux de véhicule automobile comprenant :
- au moins une première partie (2) transparente à au moins un faisceau laser, ladite partie comprenant au moins un premier matériau polymère, et
- au moins une deuxième partie (6) absorbant ledit faisceau laser et transparente à au moins une partie de la lumière visible, comprenant au moins un deuxième matériau polymère,
ladite deuxième partie étant soudée au laser à ladite première partie, et
ladite première partie (2) étant un boîtier (22) formant une enceinte pouvant accueillir au moins une source lumineuse (24) et/ou au moins un module lumineux (24).

2. Dispositif lumineux de véhicule automobile selon la revendication 1, **caractérisé en ce que** le premier matériau polymère comprend au moins un polymère organique choisi parmi le polyméthacrylate de méthyle (PMMA), le polycarbonate (PC), le polymère acrylonitrile butadiène styrène (ABS), le polytéréphtalate de butylène (PBT), l'acrylonitrile styrène acrylate (ASA), le polytéréphtalate d'éthylène (PET), et un de leurs mélanges.

3. Dispositif lumineux de véhicule automobile selon la revendication 1 ou 2, **caractérisé en ce que** le deuxième matériau polymère comprend au moins un polymère organique choisi parmi le polyméthacrylate de méthyle (PMMA), le polycarbonate (PC), le polymère acrylonitrile butadiène styrène (ABS), le polytéréphtalate de butylène (PBT), l'acrylonitrile styrène acrylate (ASA), le polytéréphtalate d'éthylène (PET), et un de leurs mélanges.

4. Dispositif lumineux de véhicule automobile selon l'une quelconque des revendications 1 à 3, **caractérisé en ce que** la deuxième partie (6) comprend au moins une deuxième charge absorbant ledit faisceau laser.

5. Dispositif lumineux de véhicule automobile selon l'une quelconque des revendications 1 à 4, **caractérisé en ce que** la première partie (2) peut absorber au moins une partie de la lumière visible.

6. Dispositif lumineux de véhicule automobile selon la revendication 5, **caractérisé en ce que** la première partie (2) comprend au moins une première charge absorbant au moins une partie de la lumière visible.

7. Dispositif lumineux de véhicule automobile selon l'une quelconque des revendications 1 à 6, **caractérisé en ce que** la deuxième partie (6) est une glace de fermeture (26).

8. Procédé de fabrication d'un dispositif lumineux selon l'une quelconque des revendications 1 à 7, **caractérisé en ce qu'**il comprend les étapes suivantes :
i. mettre en contact la première partie (2) et la deuxième partie (6), puis
ii. irradier ladite deuxième partie (6) à travers ladite première partie (2) par au moins ledit faisceau laser (12), pour souder ladite deuxième partie à ladite première partie.

9. Procédé de fabrication selon la revendication 8, **caractérisé en ce que** ledit faisceau laser (12) irradie ladite deuxième partie (6) à une longueur d'onde allant de 800 nm à 1050 nm.

10. Procédé de fabrication selon la revendication 8 ou 9, **caractérisé en ce que** le procédé comprend en outre l'étape suivante, postérieure à l'étape i :
iii. irradier ladite deuxième partie (6) à travers ladite première partie (2) par au moins un faisceau lumineux (14) différent du faisceau laser (12).

11. Procédé de fabrication selon la revendication 10, **caractérisé en ce que** le faisceau lumineux (14) irradie ladite deuxième partie (6) à une longueur d'onde allant de 350 nm à 1000 nm.

12. Procédé de fabrication selon l'une quelconque des revendications 8 à 11, **caractérisé en ce que** le faisceau laser irradie la deuxième partie à une température supérieure à la température de fusion du deuxième matériau polymère.

## Patentansprüche

1. Kraftfahrzeug-Leuchtvorrichtung, umfassend:
- mindestens einen ersten Teil (2), der für mindestens einen Laserstrahl durchlässig ist, wobei der erste Teil mindestens ein erstes Polymermaterial umfasst, und
- mindestens einen zweiten Teil (6), der den Laserstrahl absorbiert und für mindestens einen Teil des sichtbaren Lichts durchlässig ist, umfassend mindestens ein zweites Polymermaterial,
wobei der zweite Teil an den ersten Teil lasergeschweißt ist, und
wobei der erste Teil (2) ein Gehäuse (22) ist, das eine Umhausung bildet, die mindestens eine Lichtquelle (24) und/oder mindestens ein Leuchtmodul (24) aufnehmen kann.

2. Kraftfahrzeug-Leuchtvorrichtung nach Anspruch 1, **dadurch gekennzeichnet, dass** das erste Polymermaterial mindestens ein organisches Polymer umfasst, das unter dem Polymethylmethacrylat (PMMA), dem Polycarbonat (PC), dem Acrylnitril-Butadien-Styrol (ABS), dem Polybutylenterephthalat (PBT), dem Acrylnitril-Styrol-Acrylat (ASA), dem Polyethylenterephthalat (PET) und einer ihrer Mischungen gewählt ist.

3. Kraftfahrzeug-Leuchtvorrichtung nach Anspruch 1 oder 2, **dadurch gekennzeichnet, dass** das zweite Polymermaterial mindestens ein organisches Polymer umfasst, das unter dem Polymethylmethacrylat (PMMA), dem Polycarbonat (PC), dem Acrylnitril-Butadien-Styrol (ABS), dem Polybutylenterephthalat (PBT), dem Acrylnitril-Styrol-Acrylat (ASA), dem Polyethylenterephthalat (PET) und einer ihrer Mischungen gewählt ist.

4. Kraftfahrzeug-Leuchtvorrichtung nach einem der Ansprüche 1 bis 3, **dadurch gekennzeichnet, dass** der zweite Teil (6) mindestens einen zweiten Füllstoff umfasst, der den Laserstrahl absorbiert.

5. Kraftfahrzeug-Leuchtvorrichtung nach einem der Ansprüche 1 bis 4, **dadurch gekennzeichnet, dass** der erste Teil (2) mindestens einen Teil des sichtbaren Lichts absorbieren kann.

6. Kraftfahrzeug-Leuchtvorrichtung nach Anspruch 5, **dadurch gekennzeichnet, dass** der erste Teil (2) mindestens einen ersten Füllstoff umfasst, der mindestens einen Teil des sichtbaren Lichts absorbiert.

7. Kraftfahrzeug-Leuchtvorrichtung nach einem der Ansprüche 1 bis 6, **dadurch gekennzeichnet, dass** der zweite Teil (6) ein Abschlussglas (26) ist.

8. Verfahren zur Herstellung einer Leuchtvorrichtung nach einem der Ansprüche 1 bis 7, **dadurch gekennzeichnet, dass** es die folgenden Schritte umfasst:
i. Inkontaktbringen des ersten Teils (2) und des zweiten Teils (6), dann
ii. Bestrahlen des zweiten Teils (6) durch den ersten Teil (2) hindurch mit mindestens dem Laserstrahl (12), um den zweiten Teil an den ersten Teil zu schweißen.

9. Herstellungsverfahren nach Anspruch 8, **dadurch gekennzeichnet, dass** der Laserstrahl (12) den zweiten Teil (6) mit einer Wellenlänge von 800 nm bis 1050 nm bestrahlt.

10. Herstellungsverfahren nach Anspruch 8 oder 9, **dadurch gekennzeichnet, dass** das Verfahren ferner, nach dem Schritt i, den folgenden Schritt umfasst:
iii. Bestrahlen des zweiten Teils (6) durch den ersten Teil (2) hindurch mit mindestens einem Lichtstrahl (14), der von dem Laserstrahl (12) verschieden ist.

11. Herstellungsverfahren nach Anspruch 10, **dadurch gekennzeichnet, dass** der Lichtstrahl (14) den zweiten Teil (6) mit einer Wellenlänge von 350 nm bis 1000 nm bestrahlt.

12. Herstellungsverfahren nach einem der Ansprüche 8 bis 11, **dadurch gekennzeichnet, dass** der Laserstrahl den zweiten Teil mit einer Temperatur bestrahlt, die über der Schmelztemperatur des zweiten Polymermaterials liegt.

## Claims

1. Motor vehicle luminous device (20) comprising:
- at least one first portion (2) that is transparent to at least one laser beam (12), said portion comprising at least one first polymer material, and
- at least one second portion (6) that absorbs said laser beam (12) and that is transparent to at least some of the visible spectrum, comprising at least one second polymer material,
said second portion (6) being laser welded to said first portion (2) and said first portion (2) being a housing (22) forming a chamber able to accommodate at least one light source (24) and/or at least one luminous module (24).

2. Motor vehicle luminous device according to Claim 1, **characterized in that** the first polymer material comprises at least one organic polymer chosen from polymethyl methacrylate (PMMA), polycarbonate (PC), the polymer acrylonitrile butadiene styrene (ABS), polybutylene terephthalate (PBT), acrylonitrile styrene acrylate (ASA), polyethylene terephthalate (PET) and one of the blends thereof.

3. Motor vehicle luminous device according to Claim 1 or 2, **characterized in that** the second polymer material comprises at least one organic polymer chosen from polymethyl methacrylate (PMMA), polycarbonate (PC), the polymer acrylonitrile butadiene styrene (ABS), polybutylene terephthalate (PBT), acrylonitrile styrene acrylate (ASA), polyethylene terephthalate (PET) and one of the blends thereof.

4. Motor vehicle luminous device according to any one of Claims 1 to 3, **characterized in that** the second portion (6) comprises at least one second filler that absorbs said laser beam (12).

5. Motor vehicle luminous device according to any one of Claims 1 to 4, **characterized in that** the first portion (2) is able to absorb at least some of the visible spectrum.

6. Motor vehicle luminous device according to Claim 5, **characterized in that** the first portion (2) comprises at least one first filler that absorbs at least some of the visible spectrum.

7. Motor vehicle luminous device according to any one of Claims 1 to 6, **characterized in that** the second portion (6) is a closing outer lens (26).

8. Process for manufacturing a luminous device according to any one of Claims 1 to 7, **characterized in that** it comprises the following steps:
i. bringing the first portion (2) and the second portion (6) into contact, then
ii. irradiating said second portion (6) through said first portion (2) with at least said laser beam (12), in order to weld said second portion (6) to said first portion (2).

9. Manufacturing process according to Claim 8, **characterized in that** said laser beam (12) irradiates said second portion (6) at a wavelength ranging from 800 nm to 1050 nm.

10. Manufacturing process according to Claim 8 or 9, **characterized in that** the process furthermore comprises the following step, after step i:
iii. irradiating said second portion (6) through said first portion (2) with at least one light beam (14) that is different from the laser beam (12).

11. Manufacturing process according to Claim 10, **characterized in that** the light beam (14) irradiates said second portion (6) at a wavelength ranging from 350 nm to 1000 nm.

12. Manufacturing process according to any one of Claims 8 to 11, **characterized in that** the laser beam irradiates the second portion at a temperature above the melting point of the second polymer material.
